# EUROPEAN PATENT SPECIFICATION

(11) **EP 0 226 377 B1**
(45) Date of publication and mention of the grant of the patent: **02.11.1994**
(21) Application number: 86309355.5
(22) Date of filing: 01.12.1986
(51) Int. Cl.: B29B 7/04, B29B 7/74, B29B 7/24, B29C 33/30, B29C 33/10, B29B 7/84

(54) **Method and apparatus for the production of moulded plastics articles**
Verfahren und Vorrichtung zur Herstellung von geformten Kunststoffgegenständen
Procédé et dispositif pour la production de produits moulés en matière synthétique

(30) Priority: 06.12.1985 AU 3762/85
(43) Date of publication of application: 24.06.1987
(73) Proprietor: MARBLTONE GROUP AUSTRALIA PTY. LTD., Lindfield, New South Wales 2070 (AU)
(72) Inventor: Barry, Andrew Stephen, Narwee, New South Wales (AU)
(74) Representative: Lambert, Hugh Richmond

(56) References cited:
- US-A- 4 439 386
- PATENT ABSTRACTS OF JAPAN, vol. 9, no. 128 (M-384)(1851), June 4, 1985 & JP-A-60 11 323 (MATSUSHITA DENKI SANGYO K.K.) 21-01-1985
- MODERN PLASTICS INTERNATIONAL, vol. 11, no. 9, September 1981, pages 16, 21, Lausanne, CH, "Nylon RIM machine aimed at matching (or beating) urethane cycles"
- WERKSTATTSTECHNIK, ZEITSCHRIFT FÜR INDUSTRIELLE FERTIGUNG, vol. 61, no. 1, January 1971, page 45; A. PFEIFFER: "Vakuum-Giessanlage für kontinuierliche Verarbeitung von Giessharzen"
- PATENT ABSTRACTS OF JAPAN, vol. 110, no. 311 (M-528)(2367), October 23, 1986 & JP-A-61 121 903 (MATSUSHITA ELECTRIC IND. CO. LTD) 09-06-1986

## Description

This invention relates to a method and apparatus for the production of moulded plastics articles from a mouldable reaction setting material, particularly slabs or sheets and rods of heavily filled, thermo-setting synthetic resinous material having the appearance of marble or other fine grained stone.

Typically articles of the kind in question are used as bench or table tops, as bathroom wash basin or vanity unit draining boards and the like.

Hitherto, small thermo-setting resin articles have been injection moulded from resin based compositions utilising heated dies and this has proved satisfactory; but when extensive sheets are required the mould costs associated with conventional injection moulding techniques become prohibitive. This is primarily due to the high temperatures and pressures involved (at least several hundreds of degrees centigrade and several megapascals) and the need to maintain dimensional accuracy in the thickness of the finished sheet throughout its entire longitudinal and transverse extent. When long rods are required a similar difficulty arises. Indeed the problems are such that injection moulding is avoided and such articles are either not used or are fabricated by other techniques.

One widely adopted expedient for the production of sheets is to utilise a chemically reactive two part resin base and to float a layer of the uncured composition onto a moving conveyor for its support until it sets. The conveyor is usually vibrated to settle the layer and hasten the migration of air bubbles in the composition to the upper surface. Two major disabilities arise. Firstly, the long setting time requires either a long, and therefore expensive, conveyor or a very slowly moving conveyor with a consequent low production rate and secondly a finish machining operation is required to obtain dimensional accuracy and to eliminate air bubbles in the surface layer of the sheet. The latter is particularly objectionable because it is inherently wasteful of a very expensive raw material.

The importance of avoiding bubble formation in vacuum injection moulding processes is also taught in US-A-4 439 386.

With the foregoing in mind the invention was devised to provide for the moulding of sheets and rods of reaction-setting compositions utilising relatively cheap and lightly constructed moulding equipment and with very little waste.

The invention achieves that object by the method of claim 1 and the apparatus of claim 8. By de-aerating the main or predominating ingredient of a composition, mixing that main ingredient with the minor ingredient, flowing the mixture under air-less conditions as a series of incremental steps into the bottom of a vented but essentially closed mould cavity defined by a mould assembly, pausing between each step to allow the pressure in the mould to equilibrate, allowing the composition to set in the mould cavity, and then stripping the mould assembly from the finished articles the rate of flow of the mixture into the mould cavity is kept low enough to allow pressure to equalise within the cavity and avoid any substantial increase in pressure therein. During the incremental addition of the unset composition, the pressure within the mould cavity is preferably maintained below about 69 kPa (10 lb/sq. in.) gauge and preferably at around atmospheric pressure. For preference, the flowing is done intermittently by means of pump which dwells for a predetermined period at the end of each stroke thereof to allow for such pressure equalisation within the mould cavity. To allow for low flow rates into the mould cavity the mixture preferably consists of ingredients which cause the setting time of the composition to be longer than 5 minutes and preferably 10-15 minutes. The setting time may be as long as several hours with large moulds. This low setting time may be achieved by use of required amounts of setting agents or by use of a composition which only sets following application of heat to the mould cavity.

It is also preferable to allow the pressure within the mould cavity to equalise to atmospheric pressure before setting is completed.

The use of low pressures within the mould cavities allows inexpensive, relatively flimsy mould structures to be used.

For preference, said minor ingredient may be a retarder, accelerator, catalyst, or mixture thereof.

The various different aspects of the present invention will now be described by way of example only, with reference to the accompanying drawings, in which:

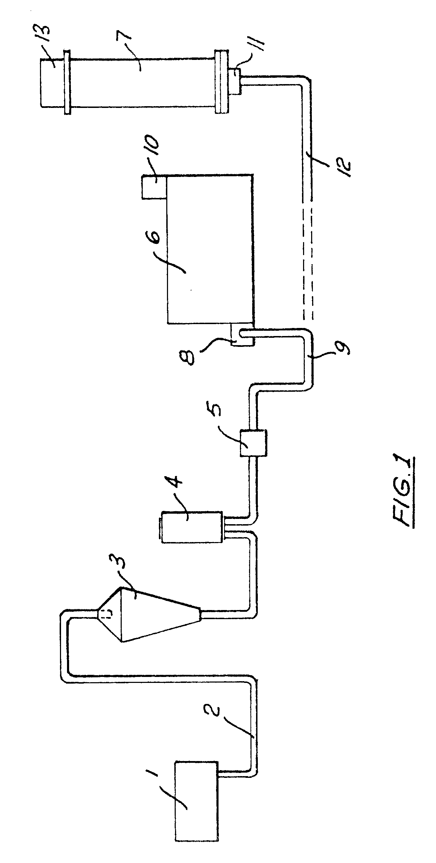

Fig. 1 is a block diagram of the components of the system used to perform the process according to the invention;

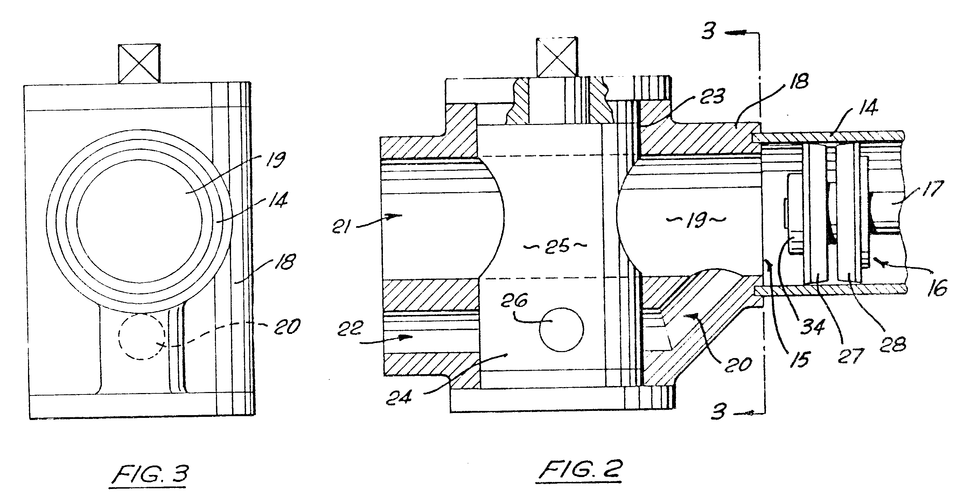

Fig. 2 is a sectional side elevation through the head end-portion of the pump shown in Fig. 1;
Fig. 3 is a section taken on line 3-3 in Fig. 2.

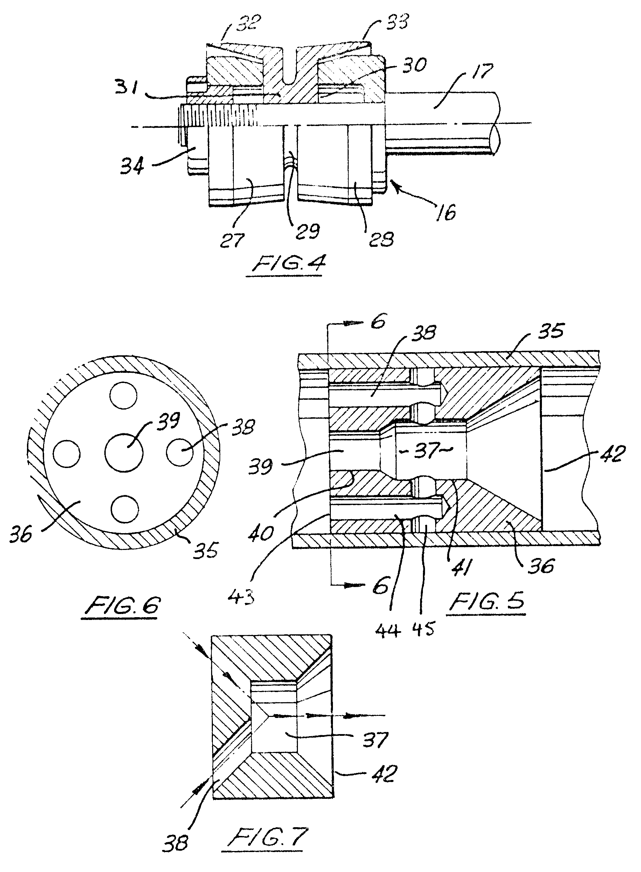

Fig. 4 is a partly sectioned side elevation of the piston in Fig. 2;
Fig. 5 is a partly sectioned side elevation of one of the mixer plugs used in the mixing device shown in Fig. 1;
Fig. 6 is a section of the mixer plug of fig. 5 taken on line 6-6;
Fig. 7 is a section of an alternative form of mixer plug for use with the invention;

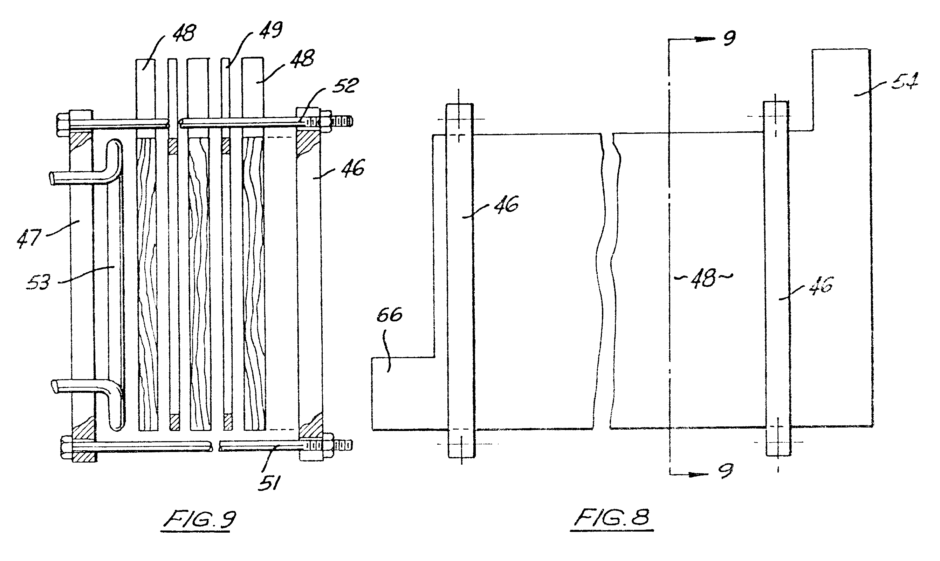

Fig. 8 is a side elevation of a multi-cavity sheet assembly;

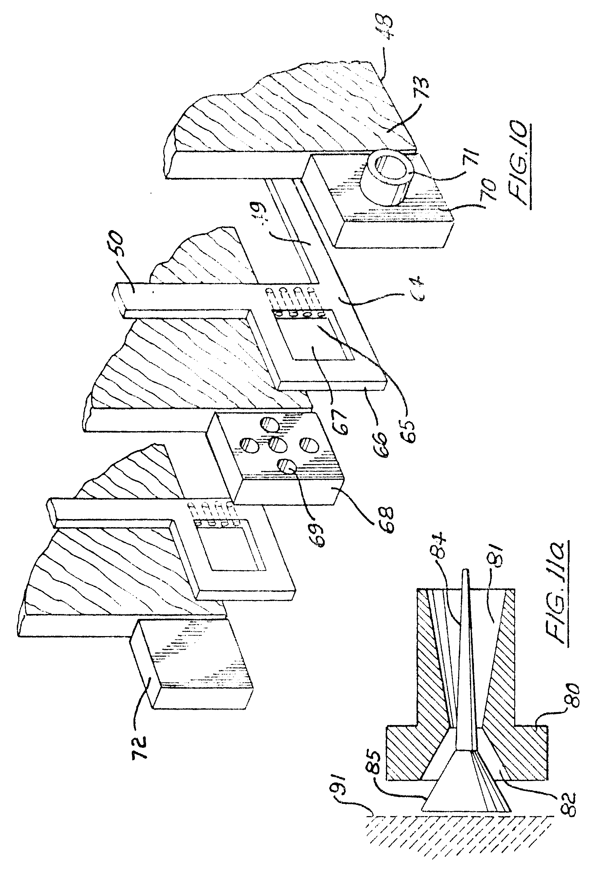

Fig. 9 is an end elevation of the mould cavities shown in Fig. 8;

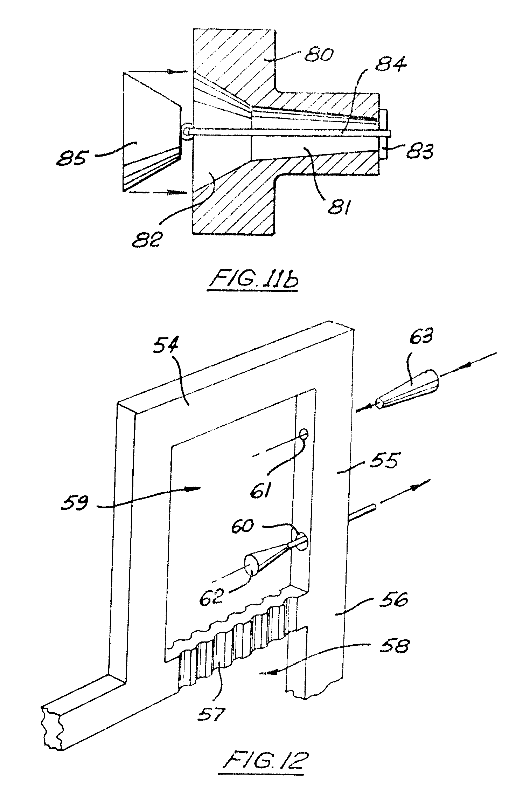

Fig. 10 is an exploded perspective view of the inlet port blocks of the assembly of Fig. 8;
Fig. 11a is a section of the inlet plug and valve shown in Fig. 10.
Fig. 11b is a section of an alternative embodiment of the inlet plug valve shown in Fig. 11a.

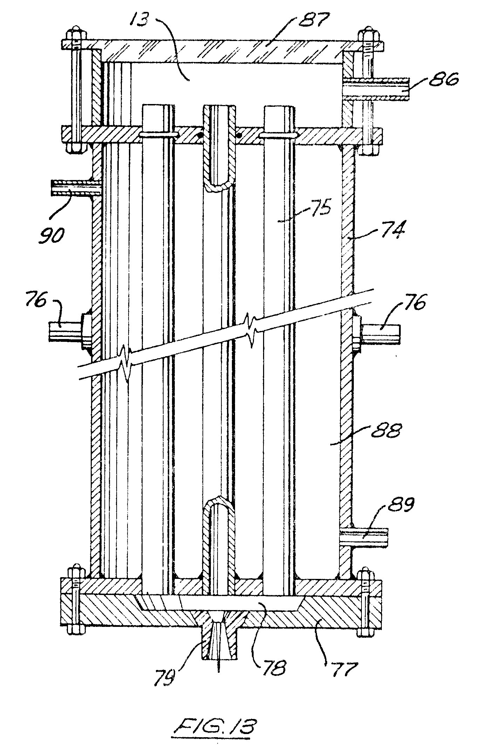

Fig. 12 is an enlarged perspective view of the riser arrangement of the assembly of Figure 8; and
Fig. 13 is a partly sectioned side elevation of a rod mould.

Measured quantities of the basic resin, preferably a polyester resin, and finely ground filler are mixed together in a conventional mixing mill 1. If a plain milky-white product is required the filler may consist solely of aluminium hydroxide or trihydrate ground to a particle size of from 4 to 30 microns. Alternatively, if coloured or other effects are required pigments, metal powders or other coloured fillers may be used.

The resin and filler mixture is then partly pumped and partly drawn through pipe 2 into the top of an evacuated hopper 3 in which a partial vacuum is maintained by a constantly running vacuum pump (not shown). The incoming material is immediately fragmented or splattered by the expansion and outflow of entrained air and falls as air-less particles to the bottom of the hopper. There it collects until taken away by a proportionating pump 4 and static mixer 5 which injects a minor but accurately metered quantity of hardener catalyst into the mixture. The pumping rates are chosen so as to ensure that the system thereafter is kept full of the mixture, and thus free of air, until the mixture is delivered into the cavities of moulds 6 and 7.

Moulds 6 and 7 in this example are shown as a mould for forming sheet material 6 and a mould for formings circular rods 7. The sheet mould 6 has an inlet valve and distributor plate 8 at the lower end of one side adapted to receive said mixture from pipe 9. At the upper end of an opposing side of said mould a riser means 10 is provided to vent the mould. Rod mould 7 is provided with a inlet valve 11 at its lower end adapted to receive said mixture from pipe 12. A vacuum tank 13 is provided at the upper end of said mould.

A novel pump for the above purpose is a feature of the invention. The pump is preferably:
(a) purely mechanical in operation,
(b) able to meter and deliver a charge with micro-metrical accuracy,
(c) particularly amenable to control by use of a micro-processor or other computer,
(d) not subject to fractional suck-back of a delivered charge, and
(e) both simple to make and to operate.

In summary, the pump of the invention comprises:
a metering cylinder having an open head-end, a piston in said cylinder screw-operable for advancement towards and retraction from said head-end,
a cylinder head on said head-end,
an intake port and a discharge port both opening to said head-end and both extending through said head,
a circularly-sectioned valve chamber extending through said head and intersecting both said ports, a plug valve rotatably housed in said chamber and having two angularly phased-apart passages through it respectively able to register with said ports, and
means for actuation of said piston and rotation of said plug-valve under such co-ordinated or independent control that when said piston is retracting from said head-end the intake port is open and the discharge port is closed, and when said piston is advancing towards said head-end the intake port is closed and the discharge port is open.

A cylinder 14 has an open-end 15 and houses a piston 16 mounted on a lead-screw 17 furnished with a nut. This screw arrangement is preferably of the recirculating ball type, and the nut is axially restrained and turned, to axially move the screw, by sprocket drive or otherwise. A cylinder-head 18 is applied by conventional bolting and flanging or otherwise to the open end 15, and has an intake port 19 and a discharge port 20 both opening to the head-end of cylinder 14.

The other end 21 of port 19 is adapted for connection to the outlet of the vacuum chamber, and the other end 22 of port 20 is adapted for connection to a mould to be described hereinafter.

The cross-sectional area of port 19 is preferably several times greater than that of port 20, as pressure available for induced intake of composition is limited.

Cylinder-head 18 has a circularly-sectioned valve chamber 23 placed in it to intersect both ports 19 and 20. This chamber houses a plug valve 24 having two angularly phased-apart passages, 25 and 26, through it respectively able to register with ports 19 and 20.

In the illustrated arrangement the passages 25 and 26 are phased 90° apart hence the part rotations of the plug valve are quarter revolution oscillations. These may be performed by use of a common rotary actuator. Preferably each "change-over" oscillation is performed abruptly so that it takes place wholly within the end-of-stroke reversals of piston 16. For preference, the piston of the pump is arranged to dwell at the end of each stroke to allow for pressure equalisation within the mould cavity.

The working stroke of piston 16 may be accurately controlled micrometrically in terms of revolutions, and fractions thereof, of the drive nut for piston rod 17, by use of a motor or other drive device whereby co-ordinated control of both plug-valve oscillation and nut actuation is effected.

In the present invention two such pumps may be used to contribute the different ingredients required (resin and catalyst) in precisely metered proportions.

A feature of the pump resides in the pump piston 16 which has bean developed to provide a long working life notwithstanding the abrasive nature of the material being pumped.

Each piston 16 comprises a pair of truncated conical cup-like bodies 27 and 28 disposed back-to-back and joined integrally together by an annular spacer portion 29 therebetween. A clearance hole 30 for the piston rod 17 pierces the floor 31 of each body and the spacer portion. The oppositely directed rims 32 and 33 of each cup-like body taper to a substantially knife edge and each rim margin diverges radially outwardly to a slight degree. The arrangement is such that as the rims wear, the nut 34 holding the piston 16 to the piston rod 17 may be tightened to bear against the radially outer margins of the floor of the cup-like bodies to cause them to bow about the spacer to some extent and cause some radially outward flexure of the rims to thereby compensate for the wear thereof. For preference the piston 16 is a one piece moulding of high density polyethylene or polypropylene.

The material, now including the catalyst, is passed through a stationary mixing device at the outlet of the pump and then the mixture is passed to the mould.

Conventional stationary mixing devices usually comprise a plurality of angularly and longitudinally spaced, obliquely disposed vanes in a pipe which cause the flowing material to divide and recombine or a plurality of plugs in the pipe each pierced by a plurality of obliquely disposed bores which produces a similar effect. Such conventional devices may be utilised in apparatus according to the invention but for preference a novel and more efficient mixer is used to replace some or all of the mixing elements of such a known device.

That novel mixer comprises a plurality of elements each comprising a pipe section 35 with a plug 36 therein. The plug is pierced by a major central passage 37 and by a plurality of minor passages 38 parallel to and spaced around the major passage.

The major passage comprises an entrance port 39, a portion 40 of constant cross-section extending from the entrance port 39 leading to a further portion 41 of somewhat larger cross-section terminating in a divergent outlet 42.

Each minor passage 38 comprises an entrance port 43, a blind ended portion 44 extending from the entrance port 43 and a radially inwardly extending transfer portion 45 communicating with the larger cross-sectioned portion 41 of the major passage upstream of its divergent outlet.

Individually the minor passage inlet ports 43 are smaller than the major passage inlet port 39, but collectively they present a lesser obstacle to material flow. Thus flow is established through all passages simultaneously and the respective streams impinge on each other in the larger cross-sectioned portion of the major passage before emerging from the latter's outlet as a mixed stream.

The resultant mixing effect is excellent and thorough mixing is obtained with a relatively smaller number of elements in series by comparison with conventional elements. More importantly, mixing is achieved in a shorter pipe length overall and with a lesser pressure drop across the mixer.

An alternative form of mixer is shown in Figure 7. The plug in this case has four outlet passages 38 equally spaced around the inlet side of said plug and extending inwardly at an angle to the axis of said plug to major passage portion 37 of constant cross section which again terminates in a divergent outlet portion 42.

The mould assembly 6 for making sheets may be a demountable structure defining a plurality of mould cavities. It preferably comprises two fabricated steel platens 46 and 47 and an array of alternating cavity side panels 48 and cavity boundary frames 49 disposed side by side on edge and compressed between the platens; there being one more side panel than there are boundary frames so that there is a panel at each side of the array.

Each side panel 48 may be a plain rectangular sheet of solid core timber panel, plywood or the like with surface coatings of a smooth, hard plastics material. Panels marketed under the trademark laminex and intended for industrial use are ideal.

Each boundary frame 49 may be a generally rectangular frame fabricated from extruded aluminium section 50 having a side equal to the width of the desired sheet.

The boundary frames and side panels may be assembled side by side in register and draw bolts 51 extended through clearance holes 52 in the platens 46 and 47 adjacent the assembly whereby the platens are drawn together to clamp the boundary frames 49 and side panels 48. Preferably, the final clamping pressure is not provided by those bolts but rather by the inflation of a pneumatic gasket 53 made from resilient air hose interposed between one platen and a secondary mating platen. That gasket 53 is fabricated to match the boundary frames and is positioned in substantial register with the boundary frames. Thus its inflation produces an exactly uniform clamping force at all points on those frames and ensures there is no distortion of the panels and frames from the planar condition.

The platens and the array of panels and frames are supported as a unit by a, preferably mobile, frame-work, with one end of the said unit slightly higher than the other. Indeed if desired the frame-work may be such that the angle of tilt is adjustable.

The uppermost end of the top side member of each boundary frame has an upwardly extending, relatively small rectangular riser projection 54 formed in it of which one upright side member 55 is an extension of the adjacent upright end member 56 of the boundary frame as a whole. A plurality of small outlet ports 57 are formed in the top side member of the boundary frame and provides for flow of material from within the cavity 58 defined by the boundary frame into the cavity 59 defined by the riser projection. The said side member 55 of the riser projection is pierced by at least one, but preferably two, vent holes 60 and 61 disposed one above the other. Thus the issuance of material from a vent hole indicates that the corresponding mould cavity has been completely filled to the level of the vent hole in question.

In practicing the invention, it is preferred that the respective mould cavities be filled as described hereinafter until material issues from the lower vent hole 60 of each riser 54. As material reaches each lower vent, both vents of the corresponding riser structure are plugged by plugs 62 and 63 to prevent further flow into the corresponding cavity. Once all cavities are so filled all of the upper vents are unplugged to allow the material to flow between cavities and equalise the head pressures therein.

The bottom end of the lowermost end member of each boundary frame has an inlet port block 64 set into it, which port block 64 is pierced by a plurality of small inlet ports 65 each of which may provide for the flow of material from outside the boundary frame into the mould cavity 58 defined by it.

The said bottom end of the lowermost end member has a rectangular runner projection 66 formed on it similar to the riser projection but extending more or less horizontally (except in that it shares the inclined position of the entire mould unit) instead of more or less vertically. Thus, each runner projection 66 defines a runner cavity 67 in communication with the said inlet ports 65.

Runner blocks 68 of the same thickness as the side panels are clamped between the respective runner projections as, in effect, extensions of the side panels. Those runner blocks, except for one end block 72, are each pierced by a considerable plurality of small diameter flow openings 69. The other end block is covered by a plenum cover 70 having a pipe connector 71 extending from it whereby material from the pump may be piped into the plenum cover for flow through the runner block flow openings 69 from one runner cavity to the next and from those cavities through the respective inlet ports 65 into the mould cavities themselves.

When the mould cavities are being so filled selected inlet ports are plugged so that the number of operable inlet ports increases from mould cavity to mould cavity along the length of the runner flow path This enables substantially equal filling rates to be achieved for all the mould cavities notwithstanding the high viscosity of the inflowing material and consequent pressure drop along that path.

Furthermore, the in-flow is intermittent to provide for equalising flow between the cavities to occur during pauses in the in-flow.

Once the mould cavities have been filled and the material therein has set the entire mould structure may be dismantled to strip it from the finished sheets. Because of the small diameter of the individual flow openings and inlet ports the runner and riser parts may be readily broken away from the finished sheet and the set plugs of material in those openings and ports may be tapped or otherwise expelled therefrom. Such expulsion is facilitated if the individual openings are tapered from end to end.

The mould structure 7 for moulding rods may comprise an outer tubular jacket 74 closed at each end and a plurality of spaced apart smaller tubes 75 extending longitudinally through the jacket. These tubes are preferably generally circular. The jacket is mounted for rotation about a transverse axis 76 at about its mid-length to allow the jacket to be tilted to an upright position for injection of material at its bottom end.

The lower end is covered by a dished cover 77 to constitute a plenum chamber 78 and is pipe connected to the pump. The pipe connection incorporates a manually operable plug type inlet valve 79.

The upper end of the mould structure is covered to form a tank 13, in this case the connection 86 is to a vacuum pump. Also the upper cover 87 is preferably transparent to enable an operator to see when the individual tubes have been filled with material.

Before the rods have set, hot water may be flowed via pipe connections 89 and 90 respectively, through the jacket space 88 which, it had been found, enhances the subsequent contraction of the moulded material to enable the finished rods to be extracted therefrom.

Embodiments of such a plug type inlet valve 79 are shown in figures 11a and 11b. Such valves are preferably used on all inlets to the mould structures to prevent back-flow of injected material. It consists of a valve housing 80 having a passage therein comprising a tapered valve seat portion 82 adapted to sealingly engage with plug valve 85, and a further tapered inlet portion 81. In the valve shown in Figure 11a each portion is oppositely tapered, said tapers diverging towards the valve extremities, and the taper of said valve seat portion 82 being greater than that of the inlet portion 81. The valve is operated by an operating stem 84 attached to the base of the plug 85. This stem is also tapered towards the base of plug 85. The valve and stem are tapered to allow removal of any material which may set within the valve passage. The wall of the mould inlet structure 91 prevents the plug 85 from leaving the valve passage.

In the valve shown in figure 11b, both the inlet and valve seat portions are tapered inwardly towards the valve inlet. In this case, the valve stem 84 is preferably disposable and is thrown away with any material which may set in the valve. Said stem member is preferably made of a flexible resilient material such as rubber, and is tensioned by a retaining member 83 so that the valve is biased towards a closed position.

It will be apparent to those skilled in the art that further embodiments and exemplifications are possible without departing from the scope of the invention as defined in the claims.

## Claims

1. A process for the production of moulded articles from a mouldable reaction setting composition, which comprises forming a mouldable reaction setting composition by mixing together under substantially airless conditions at least one major ingredient and one or more minor ingredients which together form a flowable composition which gradually reacts to form a set composition, flowing the unset composition under substantially airless conditions into a mould and allowing the composition to set therein, and separating the set composition from the mould, characterised in that, prior to mixing with said minor ingredient(s), the said major ingredient is subjected to a de-aeration treatment to remove air dispersed therein, and in that after mixing the unset composition is flowed under substantially airless conditions as a series of incremental steps into the bottom of a vented but otherwise enclosed mould cavity within said mould, and pausing between each step to allow the pressure in the mould cavity to equilibrate.

2. A process according to claim 1, characterised in that said minor ingredient(s) comprise a retarder, accelerator or catalyst, or a mixture of two or more thereof for the mouldable reaction setting composition.

3. A process according to any one of the preceding claims, characterised in that said ingredients are selected to provide a setting time for said composition of greater than 5 minutes.

4. A process according to claim 3, characterised in that said setting time is between 10 minutes and 6 hours.

5. A process according to any one of the preceding claims, characterised in that, after the last incremental addition of said unset composition, the full mould cavity is vented to allow the pressure within said cavity to equate to atmospheric pressure before the composition has completed setting.

6. A process according to any one of the preceding claims, wherein, during the incremental addition of said unset composition to said mould, the pressure in the mould cavity is kept below about 69 kPa.

7. A process according to any one of the preceding claims, characterised in that the major ingredient is de-aerated by being transferred into the top of an evacuated hopper in which a partial vacuum is maintained and allowing said ingredient to fall as airless particles to the bottom of said hopper where it is collected for subsequent mixing with said minor ingredient(s).

8. A moulding apparatus for moulding articles from a mouldable reaction setting composition comprising:
an enclosed mixing vessel (5) for mixing the ingredients of the mouldable setting composition under substantially airless conditions;
a dismantleable mould assembly (6 or 7) containing one or move mould cavities (58,59) vented to the atmosphere, said mould assembly being dismantleable following moulding and setting of the said composition in order to release the moulded article(s) from the mould cavity(ies);
an enclosed conduit (9 or 12) connecting the mixing vessel (5) to the mould assembly (6 or 7) for the conveyance of the mixed mouldable setting composition under substantially airless conditions from the mixing vessel (5) to the mould assembly (6 or 7) and into mould cavity(ies) (58,59) located therein; and
a pump (4) for pumping the mouldable setting composition under substantially airless conditions from the mixing vessel (5) to the mould assembly (6 or 7) and into the mould cavity(ies) (58,59) via said conduit (9 or 12);
characterised in that the apparatus comprises, upstream of the mixing vessel (5) and connected thereto by an enclosed conduit (2) a preliminary mixing vessel (1) for the preliminary mixing of a major component of the mouldable reaction setting composition to be fed to the mixing vessel (5) for final mixing with a minor component of the mouldable reaction setting composition fed separately to the mixing vessel, and in that a de-aeration vessel (3) is provided in said conduit (2) between the preliminary mixing vessel (1) and the final mixing vessel (5) for the de-aeration of said major component after mixing in the preliminary mixing vessel but prior to the entry of that major component into the final mixing vessel (5), said apparatus being further characterised in that said pump (4) is intermittently operable to introduce the mouldable reaction setting composition into the mould cavity(ies) (58,59) from the mixing vessel (5) in a series of incremental steps, thereby allowing the pressure in the mould cavity(ies) to equilibrate after each injection step.

9. Apparatus according to claim 8, characterised in that the deaeration vessel (3) comprises a hopper (3) connected to said conduit (2) via an inlet in the top of the hopper and an outlet in the bottom of the hopper (3), said hopper (3) being connected to an evacuation pump for evacuation of air from the hopper and from the major component of the mouldable reaction setting composition as it passes through the hopper enroute from the preliminary mixing vessel (1) to the final mixing vessel (5).

10. Apparatus according to claim 8 or 9, characterised in that said intermittently operable pump (4) comprises:
a metering cylinder (14) having an open head-end (15);
a piston (16) in said cylinder (14), screw operable for advancement towards and retraction from said head-end (15);
a cylinder head (18) on said head-end (15);
an intake port (19) and a discharge port (20) both opening to said head-end (15) and both extending through said head (18);
a circularly sectioned valve chamber (23) extending through said head (18) and intersecting both said ports (19 and 20);
a plug valve (29) rotatably housed in said chamber (23) and having two angularly phased-apart passages (25,26) through it respectively able to register with said ports (19,20), and an actuator for actuating said piston and rotating of said plug-valve in a manner such that when said piston is retracting from said head-end the intake port is open and the discharge port is closed, and when said piston is advancing towards said head-end the intake port is closed and the discharge port is open.

11. Apparatus according to claim 10, characterised in that the actuator for said piston (16) causes the piston to dwell at each end of its stroke.

12. Apparatus according to either claim 10 or 11, characterised in that the actuator for said piston (16) comprises a recirculating ball type screw arrangement having an axially restrained nut which is rotated to axially move a screw coupled to said piston.

13. Apparatus according to claim 10, characterised in that said piston (16) comprises a pair of truncated conical cup-like bodies (27 and 28) disposed back-to-back and joined integrally together by an annual spacer portion (29) therebetween.

14. Apparatus according to claim 13, characterised in that the floor (31) of each cup-like body (27 or 28) and said spacer portion (29) are pierced by a clearance hole (30) which receives a piston rod (17), said cup-like bodies (27,28) having rims (32,33) tapered to a substantially knife edge and each rim margin diverging radially outwardly to a slight degree.

15. Apparatus according to claim 14, characterised in that said piston (16) is a one piece moulding of high density polyethylene or polypropylene.

16. Apparatus according to any one of claims 8-15, characterised in that said mixing vessel (5) includes a plurality of elements each comprising a pipe section (35) with a plug (36) therein, said plug being pierced by a major central passage (37) and by a plurality of minor passages (38) generally parallel to and spaced around said major passage (37), each minor passage (38) having a transfer portion (45) communicating with said major passage (37).

17. Apparatus according to claim 16, characterised in that said major passage (37) comprises an entrance port (39), a portion (40) of constant cross-section extending from said entrance port (39) to a further portion (41) of substantially larger cross-section terminating in a divergent outlet (42), and each minor passage (38) comprising an inlet port (43), a blind end portion (44) extending from the entrance port (43), said transfer portion (45) extending radially inwardly and communicating with said larger cross-sectioned portion (41) of said major passage (37) upstream of its divergent outlet (42).

18. Apparatus according to claim 17, characterised in that each said minor passage inlet port (38) is smaller in cross-section than said major passage entrance port (39) but their collective cross-sectional area is greater than that of said major passage entrance port.

19. Apparatus according to any one of claims 8-15, characterised in that said mixing vessel (5) includes a plurality of elements each comprising a pipe section (35) with a plug therein, said plug having a plurality of spaced inlet passages (38) extending inwardly to a generally central major passage portion (37) of constant cross-section extending axially of said plug and terminating in a divergent outlet portion (42), said inlet passages (38) having entrance ports positioned radially outwardly of said major passage portion (37).

20. Apparatus according to claim 19, characterised in that said inlet passages (38) extend at an angle to the axis of said plug with said entrance ports being positioned on one side of said plug and said divergent outlet portion (42) on the other.

21. Apparatus according to any one of claims 8-20, characterised in that said mould assembly (6) defines a plurality of mould cavities (58), each formed by a pair of side panels (48) disposed on each side of a cavity boundary frame (49), and a pair of plates (46,47) which engage and clamp said side panels (48) so as to form a substantially rigid structure.

22. Apparatus according to any one of claims 8-20, characterised in that said mould assembly (6) defines a plurality of mould cavities (58) formed by an array of alternating cavity side panels (48) and cavity boundary frames (49) disposed side by side and clamped between at least two platens (46,47), there being one more side panel (48) than boundary frames (49) so the array has a panel (48) at each side thereof.

23. Apparatus according to claim 21 or 22, characterised in that said mould assembly (6) includes venting means (54) provided at an upper portion of each said boundary frame (49) and which provides an indication that the corresponding mould cavity (58) has been completely filled with said composition.

24. Apparatus according to claim 23, characterised in that said venting means (54) comprise a riser projection having a cavity therein (59) located on said upper portion of each said boundary frame (49), each said riser projection cavity (59) communicating with said corresponding mould cavity (58) by means of a plurality of outlet ports (57) piercing the top side of said each boundary frame, one or more vent holes (60,61) being located in each said riser projection, the issuance of composition therefrom indicating the complete filling of the corresponding mould cavity.

25. Apparatus according to any one of claims 21-24, characterised in that each of said boundary frames (49) is provided with an inlet port block (64) which receives and flows said composition into the respective mould cavity (58), said block (64) having a plurality of inlet ports (65) therein providing for flow of said composition from outside the respective boundary frame (49) into the respective mould cavity (58).

26. Apparatus according to claim 25, characterised in that each said boundary frame (49) has a runner projection (66) located adjacent and outward of said inlet ports (65), said runner projection (66) defining a runner cavity (67) in communication with said inlet ports (65).

27. Apparatus according to claim 26, including a plurality of runner blocks (68) clamped between respective runner projections (66), each runner block (68) having a plurality of flow openings (69) therethrough, and at least one runner block having a plenum cover (70) which receives said composition from the pump (4) such that said composition may flow through the runner block flow openings (69) from one runner cavity (67) to the next and from those cavities through said respective inlet ports (65) into said mould cavities (58).

28. Apparatus according to any one of claims 24-27, characterised in that said inlet (65) and/or outlet (57) are tapered.

29. Apparatus according to any one of claims 8-20, characterised in that said mould assembly (7) comprise a plurality of spaced apart tubes (75) mounted and extending longitudinally through an outer jacket surrounding said tubes (74), said tubes opening at one end to a plenum chamber (78) which receives said composition and opening at their other end to a vacuum chamber (13) having a means (86) for applying a vacuum thereto.

30. Apparatus according to claim 29, characterised in that the mould (7) is mounted for rotation about a transverse axis at about its mid-length to allow the mould to be tilted to an upright position for injection of said composition into said plenum chamber (78).

31. Apparatus according to claim 29 or 30, characterised in that said vacuum chamber (13) is provided with a transparent cover (87) to enable an operator to see when said tubes (75) have been filled with said composition.

32. Apparatus according to claim 29, 30 or 31, characterised in that said jacket (74) provides an enclosed space (88) between itself and said tubes (75), said jacket (74) having inlet and outlet openings (89,90) therein to allow hot water to be circulated through said space (88).

33. Apparatus according to any one of claims 8-32, characterised in that the mould assembly includes an inlet valve provided at the bottom of the or each mould cavity, said valve comprising a tapered valve member (85) which sealingly engages with a complementary inwardly tapered valve seat (82), said valve member (85) being pulled into engagement with the valve seat (82) by means of a stem member (84) extending from said valve member (85) through said valve means to an inlet portion (81) of said valve means.

34. Apparatus according to claim 33, characterised in that said valve seat (82) and said inlet portion (81) are oppositely tapered, said stem member (84) being inwardly tapered with respect to said valve means, and which allows said valve member (85) to be manually pulled into engagement with the valve seat (82).

35. Apparatus according to claim 33, characterised in that said stem member (84) is formed of resilient material which is tensioned so as to bias said valve member (5) towards a closed position.

## Patentansprüche

1. Ein Verfahren zur Herstellung von Formteilen aus einer formbaren, durch Reaktion aushärtenden Zusammensetzung, mit den Merkmalen:
- Bildung der formbaren, durch Reaktion hartenden Zusammensetzung unter im wesentlichen luftfreien Bedingungen durch Vermischen von zumindest einem Hauptbestandteil mit einem oder mehreren Nebenbestandteilen, die zusammen eine fließfähige Zusammensetzung bilden, welche durch fortschreitende Reaktion eine ausgehärtete Zusammensetzung bildet,
- Einfließen der nicht ausgehärteten Zusammensetzung unter im wesentlichen luftlosen Bedingungen in ein Formwerkzeug und
- Aushärten der Zusammensetzung darin und Entformen der ausgehärteten Zusammensetzung aus der Form, dadurch gekennzeichnet, daß vor dem Vermischen mit dem oder den Nebenbestandteil(en) der Hauptbestandteil einer Entlüftungsbehandlung unterworfen wird, um die darin dispergierte Luft zu entfernen und daß nach dem Vermischen die nicht ausgehärtete Zusammensetzung unter im wesentlichen luftlosen Bedingungen als Aufeinanderfolge inkrementaler Schritte in den Boden einer entlüfteten, jedoch ansonsten geschlossenen im Formwerkzeug befindlichen Formhöhlung einfließt und zwischen jedem Schritt zum Druckausgleich in dem Formhohlraum eine Unterbrechung erfolgt.

2. Verfahren nach Anspruch 1, dadurch gekennzeichnet, daß der bzw. die Nebenbestandteil(e) zur Bildung der formbaren, durch Reaktion erstarrenden Zusammensetzung einen Verzögerer, Beschleuniger oder Katalysator oder eine Mischung aus zwei oder mehreren derselben enthält.

3. Verfahren nach einem der vorhergehenden Ansprüche, dadurch gekennzeichnet, daß die Bestandteile derart ausgewählt werden, daß die Aushärtzeit der Zusammensetzung mehr als 5 Minuten beträgt.

4. Verfahren nach Anspruch 3, dadurch gekennzeichnet, daß die Erstarrungsdauer zwischen 10 Minuten und 6 Stunden liegt.

5. Verfahren nach einem der vorhergehenden Ansprüche, dadurch gekennzeichnet, daß nach der letzten inkrementalen Zugabe der ungehärteten Zusammensetzung die gesamte Formhöhlung entlüftet wird, um den Druck in dem Hohlraum vor dem vollständigen Erstarren der Zusammensetzung auf Atmosphärendruck auszugleichen.

6. Verfahren nach einem der vorhergehenden Ansprüche, wobei der Druck in der Formhöhlung während der inkrementalen Zugabe der nicht ausgehärteten Zusammensetzung in das Werkzeug unterhalb von etwa 69 kPa gehalten wird.

7. Verfahren nach einem der vorhergehenden Ansprüche, dadurch gekennzeichnet, daß der Hauptbestandteil dadurch entlüftet wird, daß er in den oberen Bereich eines evakuierten Behälters, in dem ein Vakuum gehalten wird, überführt wird und man den Bestandteil als luftlose Partikel auf den Boden des Behälters fallen läßt, wo er zum anschließenden Mischen mit dem bzw. den Nebenbestandteil(en) gesammelt wird.

8. Eine Formvorrichtung zum Formen von Gegenständen aus einer formbaren, durch Reaktion aushärtenden Zusammensetzung, enthaltend:
einen geschlossenen Mischbehälter (5) zum Mischen der Bestandteile der formbaren aushärtenden Zusammensetzung unter im wesentlichen luftlosen Bedingungen,
ein zerlegbares zusammengesetztes Formwerkzeug (6 oder 7) mit einer oder mehreren auf Atmosphäre entlüfteten Formhöhlungen (58,59), wobei die Formeinheit nach dem Formen und Erstarren der Zusammensetzung zerlegt bzw. geöffnet werden kann, um das bzw. die Formteil(e) aus dem Formhohlraum bzw. den Formhöhlungen zu entfernen,
eine den Mischbehälter (5) mit dem Formwerkzeug (6 oder 7) verbindende geschlossene Leitung (9 oder 12) zum Transport der gemischten, formbaren aushärtenden Zusammensetzung unter im wesentlichen luftlosen Bedingungen vom Mischbehälter (5) zum Formwerkzeug (6 oder 7) und in die darin befindliche(n) Formhöhlung(en) (58,59) sowie
eine Pumpe (4) zum Pumpen der formbaren aushärtenden Zusammensetzung unter im wesentlichen luftlosen Bedingungen aus dem Mischbehälter (5) zum Formwerkzeug (6 oder 7) und in die Formhöhlung(en) (58,59) über die Leitung (9 oder 12),
dadurch gekennzeichnet, daß die Vorrichtung einen Vormischbehälter (1) enthält, der sich oberhalb des Mischbehälters (5) befindet und mit diesem durch eine geschlossene Rohrleitung (2) verbunden ist, zum Vorabmischen eines dem Mischbehälter (5) zuzuführenden Hauptbestandteils der formbaren, durch Reaktion aushärtenden Zusammensetzung, um es abschließend mit einem dem Mischbehälter getrennt zugeführten Nebenbestandteil der formbaren, durch Reaktion härtenden Zusammensetzung zu mischen und daß ein Entlüftungsgefäß (3) in der Rohrleitung (2) zwischen dem Vorabmischbehälter (1) und dem Mischbehälter (5) zum abschließenden Mischen vorgesehen ist, um den Hauptbestandteil nach dem Mischen in dem Vormischbehälter, jedoch vor dem Eintritt des Hauptbestandteils in dem Abschluß-Mischbehälter (5), zu entlüften, wobei die Vorrichtung ferner dadurch gekennzeichnet ist, daß die Pumpe (4) intermittierend bedient werden kann, um die formbare, durch Reaktion aushärtende Zusammensetzung aus dem Mischbehälter (5) in einer Folge inkrementaler Schritte in die Formhöhlung(en) (58,59) einzuführen, wodurch sich der Druck in der/den Formhöhlung/en nach jedem Einspritzschritt ausgleicht.

9. Vorrichtung nach Anspruch 8, dadurch gekennzeichnet, daß das Entlüftungsgefäß (3) einen Trichter (3) enthält, der über einen Einlaß im oberen Bereich des Trichters und einen Auslaß im Boden des Trichters (3) mit der Leitung (2) verbunden ist, wobei der Trichter (3) mit einer Entleerungspumpe verbunden ist, um Luft aus dem Trichter und aus dem Hauptbestandteil der formbaren, durch Reaktion aushärtenden Zusammensetzung zu evakuieren, wenn diese den Trichter auf dem Weg vom Vormischbehälter (1) zum Abschluß-Mischbehälter (5) durchläuft.

10. Vorrichtung nach Anspruch 8 oder 9, dadurch gekennzeichnet, daß die intermittierend arbeitende Pumpe (4) enthält:
einen Dosierzylinder (14) mit einem offenen Kopfende (15);
einen in dem Zylinder (14) befindlichen Kolben (16), der für den Vorschub zum und den Rückzug vom Kopfende (15) mittels einer Schraubspindel betätigt wird;
einen auf dem Kopfende (15) befindlichen Zylinderkopf (18);
eine Einlaßöffnung (19) und eine Austragsöffnung (20), die beide zum Kopfende hin (15) offen sind und sich beide durch den Kopf (18) hindurch erstrecken;
eine im Querschnitt kreisförmige Ventilkammer (23), welche sich durch den Kopf (18) erstreckt und beide Öffnungen (19 und 20) durchdringt;
ein in der Kammer (23) drehbar eingesetzes Kegelventil (29), durch welches zwei winklig voneinander gestaffelte Durchgänge (25,26) laufen, die sich jeweils mit den Öffnungen (19,20) decken können, sowie ein Stellorgan, um den Kolben in Bewegung zu setzen und das Kegelventil derart zu drehen, daß beim Rückzug des Kolbens vom Kopfende die Einlaßöffnung geöffnet und die Austragsöffnung geschlossen ist und beim Vorschub des Kolbens zum Kopfende die Einlaßöffnung geschlossen und die Austragsöffnung offen ist.

11. Vorrichtung nach Anspruch 10, dadurch gekennzeichnet, daß das Stellglied für den Kolben (16) bewirkt, daß der Kolben am Ende jedes Hubs verweilt.

12. Vorrichtung nach Anspruch 10 oder 11, dadurch gekennzeichnet, daß das Stellorgan für den Kolben (16) eine KugelumlaufSchraubspindel mit einer axial eingespannten Mutter aufweist, welche zur axialen Bewegung einer mit dem Kolben gekoppelten Schraubspindel gedreht wird.

13. Vorrichtung nach Anspruch 10, dadurch gekennzeichnet, daß der Kolben (16) ein Paar kegelstumpfförmige becherartige Körper (27 und 28) enthält, die mit dem Rücken zueinander angeordnet sind und durch einen dazwischen befindlichen ringförmigen Abstandshalter (29) einstückig miteinander verbunden sind.

14. Vorrichtung nach Anspruch 13, dadurch gekennzeichnet, daß der Boden (31) jedes becherförmigen Körpers (27 oder 28) und der Abstandshalter (29) durch eine lichte Öffnung (30), die eine Kolbenstange (17) aufnimmt, durchbrochen sind, wobei die becherförmigen Körper (27,28) Ränder (32,33) aufweisen, die im wesentlichen spitz zu einer Schneidkante zulaufen, und die äußeren Enden jedes Randes radial um einen kleinen Betrag divergieren.

15. Vorrichtung nach Anspruch 14, dadurch gekennzeichnet, daß der Kolben (16) ein einteiliges Formte aus Polyethylen oder Polypropylen hoher Dichte ist.

16. Vorrichtung nach einem der Ansprüche 8-15, dadurch gekennzeichnet, daß der Mischer (5) eine Vielzahl von Elementen umfaßt, wobei jedes einen Rohrabschnitt (35) mit einem darin befindlichen Einsatzteil (36) enthält, wobei das Einsatzteil durch einen zentralen Hauptdurchgang (37) und eine Vielzahl von kleineren Durchgängen (38), die im allgemeinen parallel zum und um den Hauptdurchgang (37) herum angeordnet sind, durchbrochen ist, wobei jeder Nebendurchgang (38) einen mit dem Hauptdurchgang (37) kommunizierenden Übergangsabschnitt (45) aufweist.

17. Vorrichtung nach Anspruch 16, dadurch gekennzeichnet, daß der Hauptdurchgang (37) eine Eintrittsöffnung (39) enthält, wobei sich ein Abschnitt (40) mit gleichbleibendem Querschnitt von der Eintrittsöffnung (39) bis zu einem weiteren Abschnitt (41), der einen wesentlich größeren Querschnitt aufweist und in einem auseinanderlaufenden Auslaß (42) endet, erstreckt und jeder Nebendurchgang (38) eine Eintrittsöffnung (43) mit einem blinden, sich von der Eintrittsöffnung (43) erstreckenden Endabschnitt (44) enthält, wobei sich der Übergangsabschnitt (45) radial nach innen erstreckt und mit dem einen größeren Querschnitt aufweisenden Abschnitt (41) des Hauptdurchgangs (37) oberhalb von dessen divergierenden Auslaß (42) kommuniziert.

18. Vorrichtung nach Anspruch 17, dadurch gekennzeichnet, daß jede Einlaßöffnung eines Nebendurchgangs (38) einen kleineren Querschnitt aufweist als die Eintrittsöffnung des Hauptdurchgangs (39), daß jedoch ihre gemeinsame Querschnittsfläche größer ist als die der Eintrittsöffnung des Hauptdurchgangs.

19. Vorrichtung nach einem der Ansprüche 8-15, dadurch gekennzeichnet, daß der Mischbehälter (5) eine Vielzahl von Elementen umfaßt, wobei jedes einen Rohrabschnitt (35) mit einem darin befindlichen Einsatzteil enthält, wobei das Einsatzteil eine Vielzahl von mit Zwischenraum angeordneten Eintrittsdurchgängen (38) aufweist, die sich nach innen zu einem im allgemeinen zentralen Hauptdurchgangsabschnitt (37) mit konstantem Querschnitt erstrecken, der sich axial zum Einsatzteil erstreckt und in einen divergierenden Auslaß (42) endet, wobei die Einlaßdurchgänge (38) Eintrittsöffnungen aufweisen, die zum Hauptdurchgangsabschnitt (37) radial nach außen gerichtet angeordnet sind.

20. Vorrichtung nach Anspruch 19, dadurch gekennzeichnet, daß sich die Einlaßdurchgänge (38) in einem Winkel zur Achse des Einsatzteils erstrecken, wobei die Eintrittsöffnungen an einer Seite des Einsatzteils angeordnet sind und der divergierende Auslaß (42) an der anderen Seite angeordnet ist.

21. Vorrichtung nach einem der Ansprüche 8-20, dadurch gekennzeichnet, daß das Formwerkzeug (6) eine Vielzahl von Formhohlräumen (58) umgrenzt, die jeweils von einem Paar Seitenwände (48) gebildet werden, das auf jeder Seite eines Hohlraum-Umgrenzungsrahmens (49) angeordnet ist und ein Paar von Platten (46,47), die die Seitenwände (48) umgreifen und klemmen, so daß eine im wesentlichen starre Struktur gebildet wird.

22. Vorrichtung nach einem der Ansprüche 8-20, dadurch gekennzeichnet, daß das Formwerkzeug (6) eine Vielzahl von Formhohlräumen (58) umgrenzt, die durch eine Reihe von alternierenden Hohlraum-Seitenwänden (48) und Hohlraum-Begrenzungsrahmen (49) gebildet werden, welche nebeneinander angeordnet sind und zwischen wenigstens zwei Platten (46,47) eingespannt sind, wobei eine Seitenwand (48) mehr vorhanden ist als es Umgrenzungsrahmen (49) gibt, so daß die Anordnung an jeder Seite eine Wand (48) aufweist.

23. Vorrichtung nach Anspruch 21 oder 22, dadurch gekennzeichnet, daß das Formwerkzeug (6) ein Entlüftungsmittel (54) an einem oberen Abschnitt jedes Umgrenzungsrahmens (49) einschließt, welches eine Anzeige über die vollständige Füllung des entsprechenden Formhohlraums (58) mit der Zusammensetzung bereitstellt.

24. Vorrichtung nach Anspruch 23, dadurch gekennzeichnet, daß das Entlüftungsmittel (54) einen Aufsatz mit einem Hohlraum (59) enthält, der auf dem oberen Bereich jedes Umgrenzungsrahmens (49) angeordnet ist, wobei jeder Hohlraum (59) des Aufsatzes durch eine Vielzahl von Austrittsöffnungen (57), welche die obere Seite jedes Umgrenzungsrahmens durchbrechen, mit dem entsprechenden Formhohlraum (58) kommuniziert, wobei in jedem Aufsatz eine oder mehrere Entlüftungsöffnungen (60,61) angeordnet sind, und daraus austretende Zusammensetzung die vollständige Füllung des entsprechenden Formhohlraumes anzeigt.

25. Vorrichtung nach einem der Ansprüche 21-24, dadurch gekennzeichnet, daß jeder Umgrenzungsrahmen (49) mit einem Einlaßblock (64) versehen ist, der die Zusammensetzung aufnimmt und in den entsprechenden Formhohlraum (58) einfließen läßt, wobei der Block (64) eine Vielzahl von Einlaßöffnungen (65) aufweist, die den Fluß der Zusammensetzung von außerhalb des jeweiligen Umgrenzungsrahmens (49) in den jeweiligen Formhohlraum (58) bereitstellen.

26. Vorrichtung nach Anspruch 25, dadurch gekennzeichnet, daß jeder Umgrenzungsrahmen (49) einen vorstehenden Verteiler (66) aufweist, der angrenzend an und nach außen gerichtet von den Einlässen (65) angeordnet ist und einen Verteiler-Hohlraum (67) definiert, der mit den Einlässen (65) kommuniziert.

27. Vorrichtung nach Anspruch 26, umfassend eine Vielzahl von Angußverteiler-Blöcken (68), die zwischen den jeweiligen vorstehenden Angußverteilern (66) eingespannt sind, wobei jeder Verteilerblock (68) eine Vielzahl von Durchflußöffnungen (69) und wenigstens ein Verteilerblock einen geschlossenen Sammelraum (70) aufweist, der die Zusammensetzung von der Pumpe (4) derart aufnimmt, daß die Zusammensetzung durch die Durchflußöffnungen (69) im Angußverteiler-Block von einem Verteiler-Hohlraum (67) in den nächsten und von diesen Hohlräumen durch die jeweiligen Eintrittsöffnungen (65) in die Formhöhlungen (58) fließen kann.

28. Vorrichtung nach einem der Ansprüche 24-27, dadurch gekennzeichnet, daß der Einlaß (65) und/oder der Ablauf (57) kegelförmig sind.

29. Vorrichtung nach einem der Ansprüche 8-20, dadurch gekennzeichnet, daß das Formwerkzeug (7) eine Vielzahl von im Abstand zueinander angeordnete Rohre (75) aufweist, die in einem die Rohre umgebenden äußeren Mantel (74) angeordnet sind und sich der Länge nach durch diesen erstrecken, wobei die Rohre an einem Ende zu einer die Zusammensetzung aufnehmenden Verarbeitungskammer (78) offen sind und an ihrem anderen Ende zu einer Vakuumkammer (13) offen sind, die ein Mittel (86) zum Anlegen eines Vakuums aufweist.

30. Vorrichtung nach Anspruch 29, dadurch gekennzeichnet, daß das Formwerkzeug (7) derart montiert ist, daß es sich etwa auf der Hälfte seiner Länge um eine Querachse dreht, so daß die Form zwecks Einspritzung der Zusammensetzung in die Verarbeitungskammer (78) in eine senkrechte Stellung geneigt werden kann.

31. Vorrichtung nach Anspruch 29 oder 30, dadurch gekennzeichnet, daß die Vakuumkammer (13) mit einem transparenten Deckel (87) versehen ist, so daß eine Bedienungsperson die Füllung der Rohre (75) mit der Zusammensetzung erkennen kann.

32. Vorrichtung nach einem der Ansprüche 29, 30 oder 31, dadurch gekennzeichnet, daß die Ummantelung (74) einen geschlossenen Raum (88) zwischen sich und den Rohren (75) bereitstellt, wobei der Mantel (74) Einlaß- und Ausflußöffnungen (89,90) aufweist, so daß heißes Wasser in diesen Raum (88) umlaufen kann.

33. Vorrichtung nach einem der Ansprüche 8-32, dadurch gekennzeichnet, daß das Formwerkzeug ein am Boden des oder jedes Formhohlraums befindliches Einlaßventil aufweist, welches ein kegeliges Ventilelement (85) enthält, das in einen komplementären, sich nach innen verjüngenden Ventilsitz (82) dichtend eingreift, wobei das Ventilelement (85) durch eine Stange (84), die sich vom Ventilelement (85) durch das Ventil zu einem Einlaßabschnitt (81) des Ventils erstreckt, in Eingriff mit dem Ventilsitz (82) gezogen wird.

34. Vorrichtung nach Anspruch 33, dadurch gekennzeichnet, daß der Ventilsitz (82) und der Einlaßabschnitt (81) entgegengesetzt kegelförmig sind, wobei sich die Stange (84) in Bezug auf das Ventil nach innen verjüngt und dafür sorgt, daß das Ventilelement (85) manuell in Eingriff mit dem Ventilsitz (82) gezogen werden kann.

35. Vorrichtung nach Anspruch 33, dadurch gekennzeichnet, daß die Stange (84) aus elastischem Material gebildet ist, welches gespannt das Ventilelement (85) in Richtung auf eine geschlossene Position hält.

## Revendications

1. Procédé de production d'articles moulés à partir d'une composition pouvant être moulée durcissant par réaction, qui comprend les étapes consistant à former une composition pouvant être moulée durcissant par réaction en mélangeant ensemble, dans des conditions quasiment exemptes d'air, au moins un ingrédient principal et un ou plusieurs ingrédients mineurs qui forment ensemble une composition pouvant être coulée qui réagit progressivement pour former une composition durcie, à couler la composition non durcie dans des conditions quasiment exemptes d'air dans un moule, à permettre à la composition de durcir dans celui-ci et à séparer la composition durcie du moule, caractérisé en ce que, avant de le mélanger avec le(s)dit(s) ingrédient(s) mineur(s), ledit ingrédient principal est soumis à un traitement de désaération pour enlever l'air dispersé dans celui-ci et en ce que, après le mélange, la composition non durcie est coulée dans des conditions quasiment exemptes d'air en une suite d'étapes par incréments dans le fond d'une cavité de moule mise à l'air, mais par ailleurs fermée à l'intérieur dudit moule, un temps d'arrêt étant marqué entre chaque étape pour permettre à la pression dans la cavité de moule de s'équilibrer.

2. Procédé selon la revendication 1, caractérisé en ce que le(s)dit(s) ingrédient(s) mineur(s) comprennent un retardateur, un accélérateur ou un catalyseur ou un mélange de deux ou plus de ceux-ci pour la composition pouvant être moulée durcissant par réaction.

3. Procédé selon l'une quelconque des revendications précédentes, caractérisé en ce que lesdits ingrédients sont choisis pour procurer un temps de durcissement de ladite composition supérieur à 5 minutes.

4. Procédé selon la revendication 3, caractérisé en ce que ledit temps de durcissement est situé entre 10 minutes et 6 heures.

5. Procédé selon l'une quelconque des revendications précédentes, caractérisé en ce que, après le dernier ajout par incréments de ladite composition non durcie, la cavité de moule pleine est mise à l'air pour permettre à la pression à l'intérieur de ladite cavité de devenir égale à la pression atmosphérique avant que la composition n'ait fini de durcir.

6. Procédé selon l'une quelconque des revendications précédentes, dans lequel, pendant l'ajout par incréments de ladite composition non durcie dans ledit moule, la pression dans la cavité de moule est maintenue au-dessous d'environ 69 kPa.

7. Procédé selon l'une quelconque des revendications précédentes, caractérisé en ce que l'ingrédient principal est désaéré en étant transféré dans la partie supérieure d'une trémie évacuée dans laquelle un vide partiel est maintenu et en permettant audit ingrédient de tomber sous forme de particules exemptes d'air au fond de ladite trémie où il est recueilli pour mélange ultérieur avec le(s)dit(s) ingrédient(s) mineur(s).

8. Dispositif de moulage pour mouler des articles à partir d'une composition pouvant être moulée durcissant par réaction comprenant :
un récipient de mélange fermé (5) pour mélanger les ingrédients de la composition pouvant être moulée durcissable dans des conditions quasiment exemptes d'air,
un ensemble de moule pouvant être désassemblé (6 ou 7) contenant une ou plus cavités de moule (58, 59) mises à l'atmosphère, ledit ensemble de moule étant désassemblable après le moulage et le durcissement de ladite composition de manière à libérer les article(s) moulé(s) de la(les) cavité(s) de moule,
une conduite fermée (9 ou 12) raccordant le récipient de mélange (5) à l'ensemble de moule (6 ou 7) pour l'acheminement de la composition pouvant être moulée durcissable et mélangée dans des conditions quasiment exemptes d'air depuis le récipient de mélange (5) jusqu'à l'ensemble de moule (6 ou 7) et dans la(les) cavité(s) de moule (58, 59) située(s) dans celui-ci, et
une pompe (4) pour pomper la composition pouvant être moulée durcissable dans des conditions quasiment exemptes d'air à partir du récipient de mélange (5) jusqu'à l'ensemble de moule (6 ou 7) et dans la(les) cavité(s) de moule (58, 59) via ladite conduite (9 ou 12),
caractérisé en ce que le dispositif comprend, en amont du récipient de mélange (5) et raccordé à celui-ci par une conduite fermée (2), un récipient de mélange préliminaire (1) pour le mélange préliminaire d'un composant principal de la composition pouvant être moulée durcissant par réaction qui doit être chargé dans le récipient de mélange (5) pour mélange final avec un composant secondaire de la composition pouvant être moulée durcissant par réaction chargé séparément dans le récipient de mélange et en ce qu'un récipient de désaération (3) est prévu dans ladite conduite (2) entre le récipient de mélange préliminaire (1) et le récipient de mélange final (5) pour la désaération dudit composant principal après mélange dans le récipient de mélange préliminaire mais avant l'entrée de ce composant principal dans le récipient de mélange final (5), ledit dispositif étant en outre caractérisé en ce que ladite pompe (4) peut être mise en oeuvre de manière intermittente pour introduire la composition pouvant être moulée durcissant par réaction dans la(les) cavité(s) de moule (58, 59) à partir du récipient de mélange (5) en une suite d'étapes par incréments, permettant ainsi à la pression dans la(les) cavité(s) de moule de s'équilibrer après chaque étape d'injection.

9. Dispositif selon la revendication 8, caractérisé en ce que le récipient de désaération (3) comprend une trémie (3) raccordée à ladite conduite (2) via un orifice d'admission dans la partie supérieure de la trémie et un orifice de sortie dans le fond de la trémie (3), ladite trémie (3) étant raccordée à une pompe d'évacuation pour l'évacuation de l'air de la trémie et du composant principal de la composition pouvant être moulée durcissant par réaction lorsqu'elle passe à travers la trémie au cours de son trajet depuis le récipient de mélange préliminaire (1) vers le récipient de mélange final (5).

10. Dispositif selon la revendication 8 ou 9, caractérisé en ce que ladite pompe pouvant être mise en oeuvre de manière intermittente (4) comprend :
un cylindre doseur (14) ayant un fond ouvert (15),
un piston (16) dans ledit cylindre (14), pouvant être actionné par vis pour avance vers et retrait dudit fond (15),
une tête de cylindre (18) sur ledit fond (15),
un orifice d'admission (19) et un orifice d'évacuation (20) s'ouvrant tous deux sur ledit fond (15) et s'étendant tous deux à travers ladite tête (18),
une chambre de vanne de section circulaire (23) s'étendant à travers ladite tête (18) et intersectant les deux dits orifices (19 et 20),
une vanne à boisseau (29) logée avec faculté de rotation dans ladite chambre (23) et comportant deux passages déphasés de manière angulaire (25, 26) qui la traversent, pouvant respectivement correspondre avec lesdits orifices (19, 20) et un moyen d'actionnement pour actionner ledit piston et mettre en rotation ladite vanne à boisseau de telle manière que, lorsque ledit piston se rétracte dudit fond, l'orifice d'admission est ouvert et l'orifice d'évacuation est fermé et, lorsque ledit piston avance vers ledit fond, l'orifice d'admission est fermé et l'orifice d'évacuation est ouvert.

11. Dispositif selon la revendication 10, caractérisé en ce que le moyen d'actionnement pour ledit piston (16) amène le piston à marquer un temps d'arrêt à chaque fin de sa course.

12. Dispositif selon soit la revendication 10, soit la revendication 11, caractérisé en ce que le moyen d'actionnement pour ledit piston (16) comprend un dispositif de vis à circulation de billes comportant un écrou retenu axialement qui est entraîné en rotation de façon à déplacer axialement une vis couplée audit piston.

13. Dispositif selon la revendication 10, caractérisé en ce que ledit piston (16) comprend une paire de corps (27 ou 28) de type coupelles tronconiques disposés dos-à-dos et réunis de manière solidaire par une partie d'espacement annulaire (29) entre ceux-ci.

14. Dispositif selon la revendication 13, caractérisé en ce que le fond (31) de chaque corps de type coupelle (27 ou 28) et ladite partie d'espacement (29) sont traversés par un trou de passage (30) qui reçoit une tige de piston (17), lesdits corps de type coupelles (27, 28) ayant des rebords (32, 33) effilés quasiment en arête de couteau et chaque flanc de rebord divergeant dans les directions radiale et vers l'extérieur à un certain degré.

15. Dispositif selon la revendication 14, caractérisé en ce que ledit piston (16) est un moulage en une seule pièce de polyéthylène ou de polypropylène à haute densité.

16. Dispositif selon l'une quelconque des revendications 8 à 15, caractérisé en ce que ledit récipient de mélange (5) comprend une pluralité d'éléments comprenant chacun un tronçon de tuyau (35) avec un bouchon (36) dans celui-ci, ledit bouchon étant traversé par un passage central principal (37) et par une pluralité de passages secondaires (38) généralement parallèles audit passage principal (37) et espacés autour ce dernier, chaque passage secondaire (38) ayant une partie de transfert (45) communiquant avec ledit passage principal (37).

17. Dispositif selon la revendication 16, caractérisé en ce que le passage principal (37) comprend un orifice d'entrée (39), une partie (40) de section transversale constante s'étendant à partir dudit orifice d'entrée (39) jusqu'à une partie plus éloignée (41) de section transversale nettement plus grande se terminant en un orifice de sortie divergent (42), chaque orifice secondaire (38) comprenant un orifice d'admission (43), une partie en cul-de-sac (44) s'étendant à partir de l'orifice d'entrée (43), ladite partie de transfert (45) s'étendant dans la direction radiale vers l'intérieur et communiquant avec ladite partie de section transversale plus grande (41) dudit passage principal (37) en amont de son orifice de sortie divergent (42).

18. Dispositif selon la revendication 17, caractérisé en ce que chaque dit orifice d'admission de passage secondaire (38) est plus petit en section transversale que ledit orifice (39) d'entrée du passage principal mais leur surface de section transversale cumulée est plus grande que celle dudit orifice d'entrée du passage principal.

19. Dispositif selon l'une quelconque des revendications 8 à 15, caractérisé en ce que ledit récipient de mélange (5) comprend une pluralité d'éléments comprenant chacun une portion de tuyau (35) avec un bouchon dans ce dernier, ledit bouchon ayant une pluralité de passages d'admission espacés (38) s'étendant vers l'intérieur vers une partie de passage principal (37) généralement centrale de section transversale constante s'étendant dans la direction axiale dudit bouchon et se terminant en une partie d'orifice de sortie divergent (42), lesdits passages d'admission (38) ayant des orifices d'entrée placés dans la direction radiale vers l'extérieur de ladite partie de passage principal (37).

20. Dispositif selon la revendication 19, caractérisé en ce que lesdits passages d'admission (38) s'étendent à un certain angle par rapport à l'axe dudit bouchon, lesdits orifices d'entrée étant placés d'un côté dudit bouchon et ladite partie d'orifice de sortie divergent (42) sur l'autre.

21. Dispositif selon l'une quelconque des revendications 8 à 20, caractérisé en ce que ledit ensemble de moule (6) définit une pluralité de cavités de moule (58), chacune formée par une paire de panneaux latéraux (48) disposés sur chaque côté d'un châssis de limite de cavité (49) et une paire de plateaux (46, 47) qui s'adaptent auxdits plateaux latéraux (48) et les serrent pour former une structure pratiquement rigide.

22. Dispositif selon l'une quelconque des revendications 8 à 20, caractérisé en ce que ledit ensemble de moule (6) définit une pluralité de cavités de moule (58) formées par un ensemble de panneaux latéraux de cavité (48) et de châssis de limite de cavité (49) alternés disposés côte-à-côte et serrés entre au moins deux plateaux (46, 47), un panneau latéral (48) étant en surnombre par rapport aux châssis de limite (49) d'où il résulte que l'ensemble comporte un panneau (48) sur chacun de ses côtés.

23. Dispositif selon la revendication 21 ou 22, caractérisé en ce que ledit ensemble de moule (6) comprend des moyens d'échappement d'air (54) disposés au niveau d'une partie supérieure de chaque dit châssis de limite (49) et qui procurent une indication que la cavité de moule correspondante (58) a été complètement remplie avec ladite composition.

24. Dispositif selon la revendication 23, caractérisé en ce que lesdits moyens d'échappement d'air (54) comprennent une saillie de remontée comportant une cavité dans celle-ci (59) située sur ladite partie supérieure de chaque dit châssis de limite (49), chaque dite cavité de saillie de remontée (59) communiquant avec ladite cavité de moule correspondante (58) au moyen d'une pluralité d'orifices de sortie (57) traversant le côté supérieur de chaque dit châssis de limite, un ou davantage trous d'évent (60, 61) étant situés dans chaque dite saillie de remontée, la sortie de la composition de ceux-ci indiquant le remplissage complet de la cavité de moule correspondante.

25. Dispositif selon l'une quelconque des revendications 21 à 24, caractérisé en ce que chacun desdits châssis de limite (49) est pourvu d'un bloc d'orifices d'admission (64) qui reçoit et coule ladite composition dans la cavité de moule respective (58), ledit bloc (64) comportant une pluralité d'orifices d'admission (65) permettant l'écoulement de ladite composition à partir de l'extérieur du châssis de limite respectif (49) dans la cavité de moule respective (58).

26. Dispositif selon la revendication 25, caractérisé en ce que chaque dit châssis de limite (49) comporte une saillie de canal de coulée (66) située à proximité et vers l'extérieur desdits orifices d'admission (65), ladite saillie de canal de coulée (66) définissant une cavité de canal de coulée (67) en communication avec lesdits orifices d'admission (65).

27. Dispositif selon la revendication 26, comprenant une pluralité de blocs de canal de coulée (68) serrés entre des saillies respectives de canal de coulée (66), chaque bloc de canal de coulée (68) comportant une pluralité d'ouvertures de coulée (69) qui le traversent et au moins un bloc de canal de coulée comportant un couvercle distributeur (70) qui reçoit ladite composition de la pompe (4) de sorte que ladite composition puisse s'écouler à travers les ouvertures de coulée du bloc de canal de coulée (69) à partir d'une cavité de canal de coulée (67) à la suivante et à partir de ces cavités à travers lesdits orifices d'admission respectifs (65) dans lesdites cavités de moule (58).

28. Dispositif selon l'une quelconque des revendications 24 à 27, caractérisé en ce que lesdits orifices d'admission (65) et/ou orifices de sortie (57) sont coniques.

29. Dispositif selon l'une quelconque des revendications 8 à 20, caractérisé en ce que ledit ensemble de moule (7) comprend une pluralité de tubes espacés (75) montés et s'étendant dans la direction longitudinale à travers une enveloppe extérieure (74) entourant lesdits tubes, lesdits tubes débouchant à une extrémité sur une chambre de distribution (78) qui reçoit ladite composition et s'ouvrant à leur autre extrémité sur une chambre à vide (13) comportant un moyen (86) pour lui appliquer un vide.

30. Dispositif selon la revendication 29, caractérisé en ce que le moule (7) est monté pour rotation autour d'un axe transversal au niveau d'environ sa mi-longueur pour permettre au moule d'être basculé en une position verticale pour l'injection de ladite composition dans ladite chambre de distribution (78).

31. Dispositif selon la revendication 29 ou 30, caractérisé en ce que ladite chambre à vide (13) est pourvue d'un couvercle transparent (87) pour permettre à un opérateur de voir quand lesdits tubes (75) ont été remplis avec ladite composition.

32. Dispositif selon la revendication 29, 30 ou 31, caractérisé en ce que ladite enveloppe (74) procure un espace fermé (88) entre elle-même et lesdits tubes (75), ladite enveloppe (74) comportant des ouvertures d'admission et de sortie (89, 90) pour permettre à de l'eau chaude d'être mise à circuler à travers ledit espace (88).

33. Dispositif selon l'une quelconque des revendications 8 à 32, caractérisé en ce que l'ensemble de moule comprend une soupape d'admission disposée au fond de la ou de chaque cavité de moule, ladite soupape comprenant un élément de soupape conique (85) qui s'emboîte de manière étanche dans un siège de soupape complémentaire conique vers l'intérieur (82), ledit élément de soupape (85) étant tiré en emboîtement dans le siège de soupape (82) au moyen d'un élément de tige (84) s'étendant depuis ledit élément de soupape (85) à travers ledit moyen de soupape jusqu'à une partie d'admission (81) dudit moyen de soupape.

34. Dispositif selon la revendication 33, caractérisé en ce que ledit siège de soupape (82) et ladite partie d'admission (81) sont coniques de manière opposée, ledit élément de tige (84) étant conique vers l'intérieur par rapport audit moyen de soupape, ce qui permet audit élément de soupape (85) d'être tiré manuellement en emboîtement dans le siège de soupape (82).

35. Dispositif selon la revendication 33, caractérisé en ce que ledit élément de tige (84) est formé d'un matériau élastique qui est mis sous tension de manière à solliciter ledit élément de soupape (5) vers une position fermée.
